# EUROPEAN PATENT APPLICATION

(11) **EP 4 460 151 A1**
(43) Date of publication of application: **06.11.2024**
(21) Application number: 21969354.6
(22) Date of filing: 28.12.2021
(51) Int. Cl.: H04W 92/08

(54) **WIRELESS COMMUNICATION METHODS, TERMINAL DEVICES, AND NETWORK DEVICES**

(71) Applicant: GUANGDONG OPPO MOBILE TELECOMMUNICATIONS CORP., LTD., Dongguan, Guangdong 523860 (CN)
(72) Inventor: ZUO, Zhisong, Dongguan, Guangdong 523860 (CN); CUI, Shengjiang, Dongguan, Guangdong 523860 (CN); XU, Weijie, Dongguan, Guangdong 523860 (CN)
(74) Representative: Taor, Simon Edward William
(86) International application number: PCT/CN2021/142142
(87) International publication number: WO 2023/122975

(57) **Abstract**

A method for wireless communication, a terminal device, and a network device are provided in embodiments of the disclosure, so that in the case of many terminal devices that need to be identified at the same time and in the case of limited wireless resources available for multiplexing, the number of terminal devices involved in multiplexing can be limited through registration and/or deregistration, and thus a problem of congestion due to that a large number of terminal devices simultaneously make a response through backscattering can be solved. The method for wireless communication includes the following. A terminal device receives a first signal. The first signal is used to trigger the terminal device to perform registration, or the first signal is used to trigger the terminal device to perform deregistration; and the terminal device obtains, by means of power harvesting, power for communication and information gathering and processing.

## Description

### TECHNICAL FIELD

The disclosure relates to the field of communications, and more specifically, to a method for wireless communication, a terminal device, and a network device.

### BACKGROUND

For cellular passive internet of things (IoT) scenarios, multiple terminal devices in a network perform signal transmission through backscattering, and the multiple terminal devices obtain, by means of power harvesting, power for communication and information gathering and processing. In the case of many terminal devices that need to be identified at the same time and in the case of limited wireless resources available for multiplexing, how to limit the number of terminal devices involved in multiplexing is an urgent problem to be solved.

### SUMMARY

A method for wireless communication, a terminal device, and a network device are provided in embodiments of the disclosure, so that in the case of many terminal devices that need to be identified at the same time and in the case of limited wireless resources available for multiplexing, the number of terminal devices involved in multiplexing can be limited through registration and/or deregistration, and thus a problem of congestion due to that a large number of terminal devices simultaneously make a response through backscattering can be solved.

In a first aspect, a method for wireless communication is provided. The method includes the following. A terminal device receives a first signal. The first signal is used to trigger the terminal device to perform registration, or the first signal is used to trigger the terminal device to perform deregistration. The terminal device obtains, by means of power harvesting, power for communication and information gathering and processing.

In a second aspect, a method for wireless communication is provided. The method includes the following. A network device transmits a first signal to a terminal device. The first signal is used to trigger the terminal device to perform registration, or the first signal is used to trigger the terminal device to perform deregistration. The terminal device obtains, by means of power harvesting, power for communication and information gathering and processing.

In a third aspect, a terminal device is provided. The terminal device is configured to perform the method in the first aspect. Specifically, the terminal device includes a functional module configured to perform the method in the first aspect.

In a fourth aspect, a network device is provided. The network device is configured to perform the method in the second aspect. Specifically, the network device includes a functional module configured to perform the method in the second aspect.

In a fifth aspect, a terminal device is provided. The terminal device includes a processor and a memory. The memory is configured to store computer programs. The processor is configured to invoke and execute the computer programs stored in the memory to perform the method in the first aspect.

In a sixth aspect, a network device is provided. The network device includes a processor and a memory. The memory is configured to store computer programs. The processor is configured to invoke and execute the computer programs stored in the memory to perform the method in the second aspect.

In a seventh aspect, an apparatus is provided. The apparatus is configured to implement the method in any one of the first aspect and the second aspect. Specifically, the apparatus includes a processor. The processor is configured to invoke and execute computer programs stored in a memory to enable a device equipped with the apparatus to perform the method in any one of the first aspect and the second aspect.

In an eighth aspect, a computer-readable storage medium is provided. The computer-readable storage medium is configured to store computer programs which enable a computer to perform the method in any one of the first aspect and the second aspect.

In a ninth aspect, a computer program product is provided. The computer program product includes computer program instructions which enable a computer to perform the method in any one of the first aspect and the second aspect.

In a tenth aspect, a computer program is provided. The computer program, when run on a computer, enables the computer to perform the method in any one of the first aspect and the second aspect.

With the above technical solution, the network device triggers, via the first signal, the terminal device to perform registration or deregistration. That is, in embodiments of the disclosure, in the case of limited wireless resources available for multiplexing, the number of terminal devices involved in multiplexing can be limited through registration and/or deregistration, and thus a problem of congestion due to that a large number of terminal devices simultaneously make a response through backscattering can be solved.

### BRIEF DESCRIPTION OF THE DRAWINGS

FIG. 1 is a schematic diagram of an architecture of a communication system applied in the disclosure.
FIG. 2 is a schematic diagram of a zero-power communication system in an example provided in the disclosure.
FIG. 3 is a diagram illustrating a principle of power harvesting provided in the disclosure.
FIG. 4 is a diagram illustrating a principle of backscatter communication provided in the disclosure.
FIG. 5 is a diagram illustrating a circuit principle of resistive load modulation provided in the disclosure.
FIG. 6 is a schematic diagram illustrating symmetrical frequency-shifted reflection generated by transmission in a frequency domain provided in the disclosure.
FIG. 7 is a schematic diagram illustrating a power supply signal and a backscattered signal provided in the disclosure.
FIG. 8 is a schematic interactive flow chart illustrating a method for wireless communication according to embodiments in the disclosure.
FIG. 9 is a schematic diagram illustrating cell registration according to embodiments of the disclosure.
FIG. 10 is a schematic diagram illustrating resources for backscattered signals from multiple terminal devices according to embodiments of the disclosure.
FIG. 11 is a schematic block diagram of a terminal device according to embodiments of the disclosure.
FIG. 12 is a schematic block diagram of a network device according to embodiments of the disclosure.
FIG. 13 is a schematic block diagram of a communication device according to embodiments of the disclosure.
FIG. 14 is a schematic block diagram of an apparatus according to embodiments of the disclosure.
FIG. 15 is a schematic block diagram of a communication system according to embodiments of the disclosure.

### DETAILED DESCRIPTION

The following will describe technical solutions of embodiments of the disclosure with reference to the accompanying drawings in embodiments of the disclosure. Apparently, embodiments described herein are merely some embodiments, rather than all embodiments, of the disclosure. Based on embodiments of the disclosure, all other embodiments obtained by those of ordinary skill in the art without creative effort shall fall within the protection scope of the disclosure.

The technical solutions of embodiments of the disclosure can be applicable to various communication systems, for example, a global system of mobile communication (GSM), a code division multiple access (CDMA) system, a wideband code division multiple access (WCDMA) system, a general packet radio service (GPRS) system, a long term evolution (LTE) system, an advanced LTE (LTE-A) system, a new radio (NR) system, an evolved system of the NR system, an LTE-based access to unlicensed spectrum (LTE-U) system, an NR-based access to unlicensed spectrum (NR-U) system, a non-terrestrial network (NTN) system, a universal mobile telecommunication system (UMTS), a wireless local area network (WLAN), a wireless fidelity (Wi-Fi), a 5th-generation (5G) communication system, a cellular internet of things (IoT), a cellular passive IoT, or other communication systems.

Generally, a conventional communication system supports limited connections and thus is easy to implement. However, with development of the communication technology, the mobile communication system can not only support conventional communication, but also support, for example, device-to-device (D2D) communication, machine-to-machine (M2M) communication, machine type communication (MTC), vehicle-to-vehicle (V2V) communication, and vehicle-to-everything (V2X) communication, etc. Embodiments of the disclosure also can be applied to these communication systems.

Optionally, the communication system in embodiments of the disclosure may be applied in a carrier aggregation (CA) scenario, a dual connectivity (DC) scenario, and a standalone (SA) scenario.

Optionally, the communication system in embodiments of the disclosure may be applied to an unlicensed spectrum (also regarded as a shared spectrum) or may be applied to a licensed spectrum (also regarded as an unshared spectrum).

Various embodiments of the disclosure are described in connection with a network device and a terminal device. The terminal device may also be referred to as a user equipment (UE), an access terminal, a subscriber unit, a subscriber station, a mobile station, a remote station, a remote terminal, a mobile device, a user terminal, a terminal, a wireless communication device, a user agent, or a user device, etc.

In embodiments of the disclosure, the network device may be a device configured to communicate with a mobile device, and the network device may be an access point (AP) in a WLAN, a base transceiver station (BTS) in GSM or CDMA, or may be a Node B (NB) in WCDMA, or may be an evolutional Node B (eNB or eNodeB) in LTE, or a relay station or AP, or an in-vehicle device, a wearable device, a network device (gNB) in an NR network, a network device in a future evolved PLMN, or a network device in an NTN, etc.

By way of explanation rather than limitation, in embodiments of the disclosure, the network device may be mobile. For example, the network device may be a mobile device. Optionally, the network device may be a satellite or a balloon base station. For example, the satellite may be a low earth orbit (LEO) satellite, a medium earth orbit (MEO) satellite, a geostationary earth orbit (GEO) satellite, a high elliptical orbit (HEO) satellite, etc. Optionally, the network device may also be a base station deployed on land or water.

In embodiments of the disclosure, the network device serves a cell, and the terminal device communicates with the network device on a transmission resource (for example, a frequency-domain resource or a spectrum resource) for the cell. The cell may be a cell corresponding to the network device (for example, a base station). The cell may belong to a macro base station or may belong to a base station corresponding to a small cell. The small cell may include a metro cell, a micro cell, a pico cell, a femto cell, and the like. These small cells are characterized by small coverage and low transmission power and are adapted to provide data transmission service with a high rate.

The terminal device may be a station (ST) in a WLAN, a cellular radio telephone, a cordless telephone, a session initiation protocol (SIP) telephone, a wireless local loop (WLL) station, a personal digital assistant (PDA), a handheld device or a computing device with wireless communication functions, other processing devices coupled with a wireless modem, an in-vehicle device, a wearable device, and a terminal device in a next-generation communication system, for example, a terminal device in an NR network, a terminal device in a future evolved public land mobile network (PLMN), a terminal device in a cellular IoT, a terminal device in a cellular passive IoT, etc.

In embodiments of the disclosure, the terminal device may be deployed on land, which includes indoor, outdoor, handheld, wearable, or in-vehicle. The terminal device may also be deployed on water (such as a ship, etc.). The terminal device may also be deployed in the air (such as an airplane, a balloon, a satellite, etc.).

In embodiments of the disclosure, the terminal device may be a mobile phone, a pad, a computer with wireless transceiver functions, a virtual reality (VR) terminal device, an augmented reality (AR) terminal device, a wireless terminal device in industrial control, a wireless terminal device in self-driving, a wireless terminal device in remote medicine, a wireless terminal device in a smart grid, a wireless terminal device in transportation safety, a wireless terminal device in a smart city, or a wireless terminal device in a smart home, etc.

By way of explanation rather than limitation, in embodiments of the disclosure, the terminal device may also be a wearable device. The wearable device may also be called a wearable smart device, which is a generic term of wearable devices obtained through intelligentization design and development on daily wearing products with wearable technology, for example, glasses, gloves, watches, clothes, accessories, and shoes. The wearable device is a portable device that can be directly worn or integrated into clothes or accessories of a user. In addition to being a hardware device, the wearable device can also realize various functions through software support, data interaction, and cloud interaction. A wearable smart device in a broad sense includes, for example, a smart watch or smart glasses with complete functions and large sizes and capable of realizing independently all or part of functions of a smart phone, and for example, various types of smart bands and smart jewelry for physical monitoring, of which each is dedicated to application functions of a certain type and required to be used together with other devices such as a smart phone.

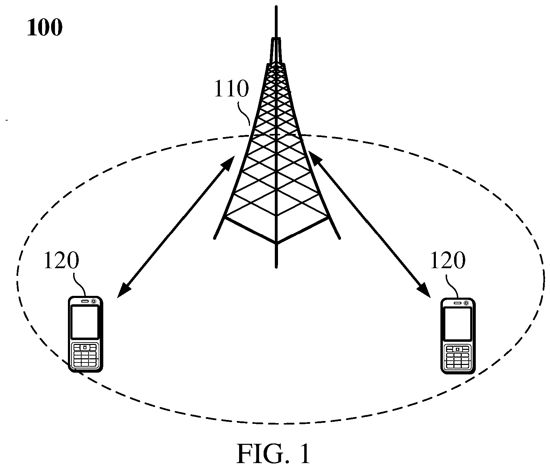

Exemplarily, FIG. 1 illustrates a communication system 100 to which embodiments of the disclosure are applied. The communication system 100 may include a network device 110. The network device 110 may communicate with a terminal device 120 (also referred to as "communication terminal" or "terminal"). The network device 110 can provide a communication coverage for a specific geographical area and communicate with terminal devices in the coverage area.

FIG. 1 exemplarily illustrates one network device and two terminal devices. Optionally, the communication system 100 may also include multiple network devices, and there can be other number of terminal devices in a coverage area of each of the network devices. Embodiments of the disclosure are not limited in this regard.

Optionally, the communication system 100 may further include other network entities such as a network controller, a mobility management entity, or the like, and embodiments of the disclosure are not limited in this regard.

It may be understood that, in embodiments of the disclosure, a device with communication functions in a network/system can be referred to as a "communication device". Taking the communication system 100 illustrated in FIG. 1 as an example, the communication device may include the network device 110 and the terminal device(s) 120 that have communication functions. The network device 110 and the terminal device(s) 120 can be the devices described above and will not be elaborated again herein. The communication device may further include other devices such as a network controller, a mobility management entity, or other network entities in the communication system 100, and embodiments of the disclosure are not limited in this regard.

It may be understood that, the terms "system" and "network" herein are usually used interchangeably throughout the disclosure. The term "and/or" herein only describes an association relationship between associated objects, which means that there can be three relationships. For example, *A* and/or *B* can mean *A* alone, both *A* and *B* exist, and *B* alone. In addition, the character "j" herein generally indicates that the associated objects are in an "or" relationship.

It may be understood that, "indication" referred to in embodiments of the disclosure may be a direct indication, may be an indirect indication, or may mean that there is an association relationship. For example, *A* indicates *B* may mean that *A* directly indicates *B,* for instance, *B* can be obtained according to *A*; may mean that *A* indirectly indicates *B,* for instance, *A* indicates *C*, and *B* can be obtained according to *C*; or may mean that there is an association relationship between *A* and *B.*

In the elaboration of embodiments of the disclosure, the term "correspondence" may mean that there is a direct or indirect correspondence between the two, may mean that there is an association between the two, or may mean a relationship of indicating and indicated or configuring and configured, etc.

In embodiments of the disclosure, the "pre-defined" or "pre-configured" can be implemented by pre-saving a corresponding code or table in a device (for example, including the terminal device and the network device) or in other manners that can be used for indicating related information, and the disclosure is not limited in this regard. For example, the "pre-defined" may mean defined in a protocol.

In embodiments of the disclosure, the "protocol" may refer to a communication standard protocol, which may include, for example, an LTE protocol, an NR protocol, a protocol applied to a future communication system, and an IoT protocol, and the disclosure is not limited in this regard.

In order to facilitate understanding of the technical solutions of embodiments of the disclosure, the following describes the related technologies of embodiments of the disclosure. The related technologies below as an optional solution may be arbitrarily combined with the technical solutions of embodiments of the disclosure, and any combination thereof may belong to the scope of protection of embodiments of the disclosure. Embodiments of the disclosure include at least part of the following.

In recent years, a zero-power device may have a wide application scenario. A typical example of the zero-power device may be a device with radio frequency identification (RFID), where RFID is a technology that can realize contactless automatic transmission and identification of tag information by means of radio coupling between a transmitting terminal and a receiving terminal. The radio coupling includes near-field inductive coupling and far-field electromagnetic coupling. An RFID tag also is known as a radio frequency (RF) tag or a tag. According to different ways of power supply, tags can be classified into active tags, passive tags, and semi-passive tags. The active tag is powered by a built-in battery. Different from a mode in which passive RF is activated, the active tag may perform information transmission in a set frequency band. The passive tag does not support a built-in battery. When the passive tag gets close to a reader, the tag is within a near-field range formed by antenna radiation of the reader, and an antenna of the tag generates an induced current through electromagnetic induction. The induced current drives a chip circuit in the tag. The chip circuit transmits identification information stored in the tag to the reader via the antenna in the tag. A semi-active tag inherits the advantages of a passive tag including small size, lightweight, low price, and long service life. When the reader does not access the tag, few circuits in the tag are powered by a built-in battery. When the reader accesses the tag, an RFID circuit is powered by the built-in battery to increase the range that the tag can be read, thereby improving the reliability of communication.

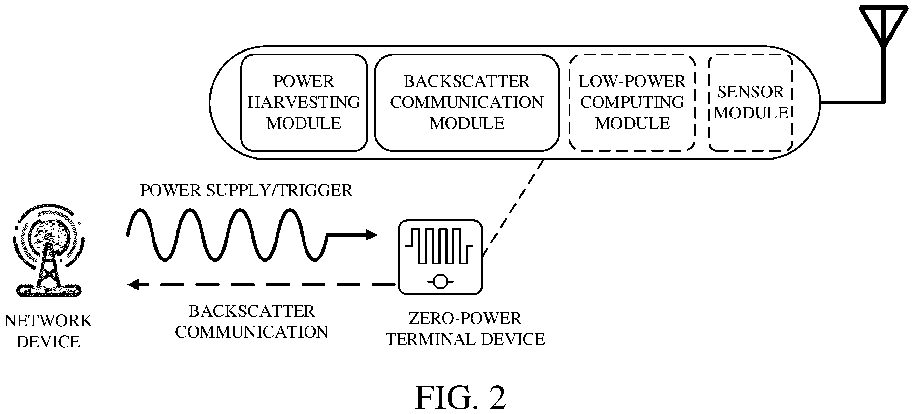

As a wireless communication technology, the most basic RFID system is composed of two parts: a tag and a reader/writer. The tag consists of a coupling component(s) and a chip. Each tag has a unique electronic code and is placed on a target object to be measured to mark the target object. The reader not only can read information in the tag but also can write the information into the reader, and further can provide power for the tag to perform communication. As illustrated in FIG. 2, the tag receives an RF signal transmitted by the reader in the case where the tag enters an electromagnetic field formed by the reader. The passive tag transmits information in the tag through power obtained from the electromagnetic field in the space. The reader reads and decodes the information to recognize the tag.

RFID is a zero-power communication. The key technologies for the type of zero-power communication include power harvesting, backscatter communication, and low-power computing. As illustrated in FIG. 2, a typical zero-power communication system includes a reader and a zero-power terminal device. The reader may emit a radio wave to power the zero-power terminal device. A power harvesting module mounted in the zero-power terminal device may harvest power carried in a radio wave (i.e., a radio wave emitted by the reader illustrated in FIG. 2) in the space, to drive a low-power computing module of the zero-power terminal device and realize backscatter communication. After the zero-power terminal device obtains power, the zero-power terminal device can receive a control command from the reader, and transmit data to the reader according to the control command by means of backscattering. The data transmitted may come from data (e.g., identification or pre-written information, such as date of manufacture, brand, manufacturer, etc. of goods) stored in the zero-power terminal device itself. The zero-power terminal device can also be loaded with various types of sensors, so that data collected by the various types of sensors can be reported according to a zero-power mechanism.

Zero-power communication adopts power harvesting and backscatter communication technologies. A zero-power communication network is formed by a network device and a zero-power terminal device. As illustrated in FIG. 2, the network device is configured to transmit a wireless power-supply signal and a downlink (DL) communication signal to a zero-power terminal device, and the network device is configured to receive a backscattered signal from the zero-power terminal device. A basic zero-power terminal device includes a power harvesting module, a backscatter communication module, and a low-power computing module. In addition, the zero-power terminal device may also have a memory or a sensor for storing some basic information (such as an item identifier (ID)) or obtaining sensing data such as ambient temperature and ambient humidity.

Key technologies for zero-power communication are illustrated as follows.

### RF power harvesting

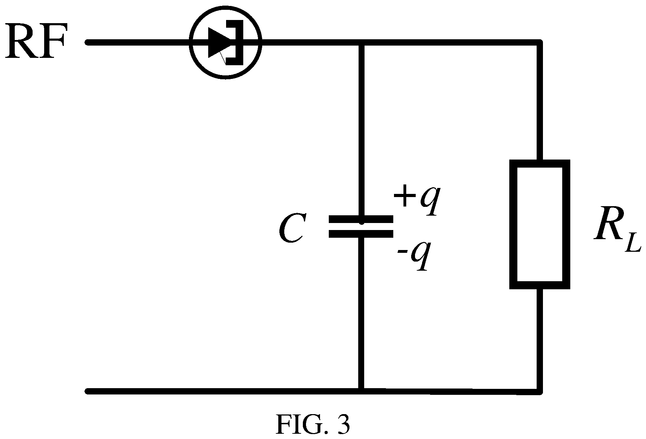

As illustrated in FIG. 3, an RF power harvesting module harvests power of spatial electromagnetic waves through electromagnetic induction to obtain power for driving the zero-power terminal device, for example, driving a low-power demodulation and modulation module, driving a sensor, and reading a memory. Therefore, the zero-power terminal device does not need a conventional battery.

### Backscatter communication

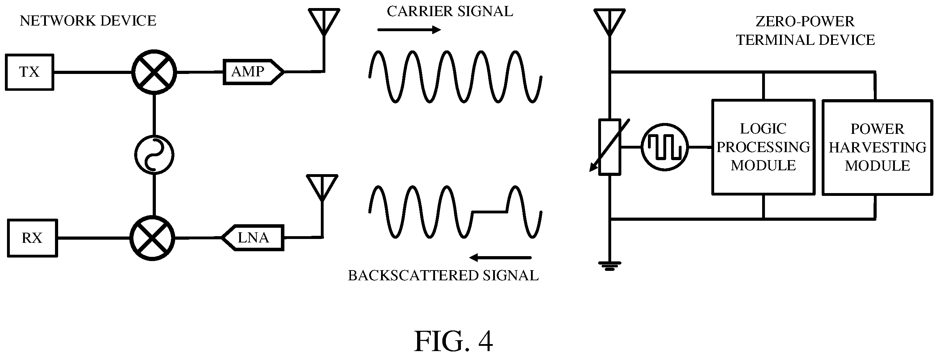

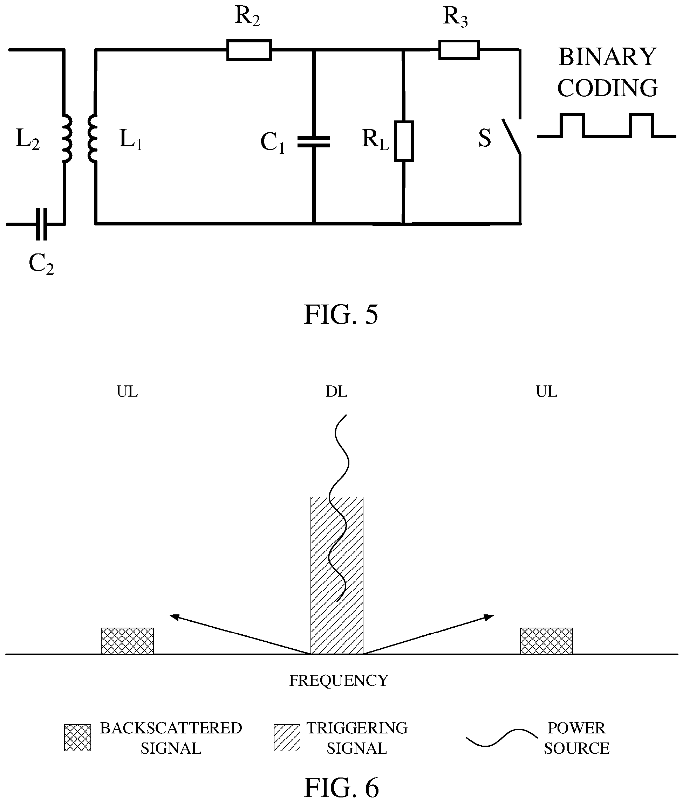

As illustrated in FIG. 4, the zero-power terminal device receives a carrier signal transmitted by the network device, modulates the carrier signal, loads information to-be-transmitted, and radiates a modulated signal through an antenna. This process of information transmission is referred to as backscatter communication. Backscattering is closely related to load modulation. In the load modulation, a circuit parameter(s) of an oscillation circuit in the zero-power terminal device is adjusted and controlled according to a tick of a data stream, so that magnitude and other parameters of impedance of the tag are consequently changed, thereby completing modulation. The load modulation mainly includes two manners: resistive load modulation and capacitive load modulation. In resistive load modulation, a resistor is connected in parallel with a load. As illustrated in FIG. 5, on and off of the resistor is under the control of a binary data stream. The on and off of the resistor results in a change in a circuit voltage to achieve amplitude-shift keying (ASK), i.e., the modulation and transmission of a signal is achieved by adjusting magnitude of a backscattered signal of the zero-power terminal device. Similarly, in capacitive load modulation, on and off of a capacitor can result in a change in a resonant frequency of a circuit to achieve frequency-shift keying (FSK), i.e., the modulation and transmission of a signal is achieved by adjusting an operating frequency of a backscattered signal of the zero-power terminal device.

As can be seen, the zero-power terminal device performs information modulation on the carrier signal by means of load modulation, so as to achieve backscatter communication. Therefore, the zero-power terminal device has significant advantages as follows.
(1) The terminal device does not actively perform signal transmission and thus does not require a complex RF link such as a power amplifier (PA), an RF filter, etc.
(2) The terminal device does not need to actively generate a high-frequency signal and thus does not need a high-frequency crystal oscillator.
(3) By using backscatter communication, the terminal device does not need to consume its power to perform signal transmission. 2, RF power harvesting

### Coding Technology

In data transmitted by the tag, binaries 1 and 0 may be expressed in different forms of codes. An RFID system generally uses one of: non return zero (NRZ)-inverse coding, Manchester coding, unipolar return zero (RZ) coding, differential binary phase (DBP) coding, differential coding, pulse-interval encoding (PIE), bi-phase space coding (FM0), miller encoding, or differential coding. In general, different pulse signals are used to express 0 and 1.

In some scenarios, according to power sources of zero-power terminal devices and usage of the zero-power terminal devices, the zero-power terminal devices can be classified into a passive zero-power terminal device, a semi-passive zero-power terminal device, and active zero-power terminal device.

### Passive zero-power terminal device

A zero-power terminal device does not need a built-in battery. In the case where the zero-power terminal device gets close to the network device (e.g. a reader in the RFID system), the zero-power terminal device is within a near-field range formed by antenna radiation of the network device. In this case, an antenna of the zero-power terminal device generates an induced current through electromagnetic induction. The induced current drives a low-power chip circuit of the zero-power terminal device to perform demodulation of a forward link signal and modulation of a reverse link signal. For a backscatter link, the zero-power terminal device performs signal transmission through backscattering.

It can be seen that the passive zero-power terminal device does not need a built-in battery to drive either a forward link or a reverse link. The passive zero-power terminal device truly is a zero-power terminal device.

The passive zero-power terminal device does not need a battery and has a simple RF circuit and a simple baseband circuit. For example, the passive zero-power terminal device does not need components such as a low-noise amplifier (LNA), a PA, a crystal oscillator, an analogue-to-digital converter (ADC), and the like. The passive zero-power terminal device thus has advantages such as small size, lightweight, low price, and long service life.

### Semi-passive zero-power terminal device

A semi-passive zero-power terminal device is not equipped with a conventional battery. However, the semi-passive zero-power terminal device can use an RF power harvesting module to harvest power from a radio wave and store the power harvested in a power storage unit (e.g., a capacitor). After the power storage unit obtains power, the power storage unit can drive the low-power chip circuit of the zero-power terminal device to perform demodulation of the forward link signal and modulation of the reverse link signal. For the backscatter link, the zero-power terminal device performs signal transmission through backscattering.

It can be seen that the semi-passive zero-power terminal device does not need a built-in battery to drive either the forward link or the reverse link. Although the passive zero-power terminal device uses a power stored in the capacitor in operation, since the power is the power harvested by the power harvesting module from the radio wave, the passive zero-power terminal device also is a zero-power terminal device.

The semi-passive zero-power terminal device inherits many advantages of the passive zero-power terminal device, and thus has advantages such as small size, lightweight, low price, and long service life.

### Active zero-power terminal device

The zero-power terminal device used in some scenarios may be referred to as an active zero-power terminal device which can have a built-in battery. The battery is used to drive the low-power chip circuit of the zero-power terminal device to perform demodulation of the forward link signal and modulation of the reverse link signal. However, for the backscatter link, the zero-power terminal device performs signal transmission through backscattering. Therefore, zero-power consumption of this kind of terminal devices is mainly reflected in the fact that signal transmission in the reverse link does not require power of the terminal device and is based on backscattering.

The built-in battery of the active zero-power terminal device powers an RFID chip to increase a reading and writing distance of the tag, thereby improving reliability of communication. Therefore, the active zero-power terminal device may be applied in some scenarios that have high requirements on communication distance, reading delay, and other aspects.

### Received signal strength (RSS) positioning

An RSS positioning technology is a positioning method based on a law that a strength of a signal changes with change of a propagation distance. The RSS positioning technology determines a target position according to strengths of signals, from the same target source, received by multiple reference nodes. The RSS positioning technology is currently widely used for indoor positioning. The traditional RSS positioning technology based on geometric measurement firstly needs to measure a strength of a signal, from a target, received by each monitoring node, then inversely deduces a propagation distance d between each node and the target according to a signal attenuation model, and further estimates a relative geographic position of a signal source to-be-positioned.

### Cellular passive IoT

With the increase of applications in the 5G industry, types and application scenarios of connection things are increasing, and requirements on price and power consumption of communication terminal devices are increasingly higher. The application of low-cost battery-less passive IoT devices has become a key technology in the cellular IoT, enriching types of and the number of terminal devices linked in the 5G network and truly realizing interconnection of everything. A passive IoT device can be applied to the cellular IoT based on an existing zero-power device.

### Subcarrier modulation

In subcarrier modulation, a signal is first modulated onto carrier 1, and it is decided to modulate the signal again for a certain reason, and thus the modulated signal is modulated onto another carrier 2 of a relatively high frequency. Subcarrier modulation is a type of modulation often used in the RFID system.

In order to facilitate understanding of embodiments of the disclosure, the problems solved in the disclosure are described below.

In the cellular network, a conventional terminal device is powered by a battery. A zero-power terminal device is introduced in the cellular network, and the zero-power terminal device obtains power via a power supply signal provided by a base station or other sources. In FIG. 6, a triggering signal and power are provided to the zero-power terminal device through a DL frequency, and the zero-power terminal device performs information feedback to the base station through an uplink (UL) frequency by means of backscattering. As illustrated in FIG. 6, symmetric frequency-shifted reflection may be generated by transmission in frequency domain, and only one of frequency points is picked up through technologies such as a filter.

In existing RFID technologies, a UL-DL time-domain structure in a cellular network cannot be adequately considered and supported. Taking an NR system as an example, resources of different frequencies can be flexibility configured in the cellular network. In a frequency division duplex (FDD) mode, the base station performs signal transmission on a DL resource and accordingly the terminal devices may perform signal transmission on a UL resource. DL and UL are separated according to frequencies. On UL, multiple terminal devices in the network perform signal reflection, and multiplexing of the multiple terminal devices becomes a key issue. How to realize that different terminal devices can occupy different resources, such as different positions in time domain, frequency domain, or even code domain, is a problem that needs to be solved. In the case where many terminal devices need to be identified at the same time in the cellular network, how to use a scheme to sense/record a large number of terminal devices in the case of limited wireless resources available for multiplexing also is one of difficulties that need to be overcome. Therefore, a method for limiting the number of multiple users involved in multiplexing needs to be studied out.

Based on the above technical problems, a solution to limit the number of multiple users involved in multiplexing is proposed in the disclosure, so that in the case of many terminal devices that need to be identified at the same time and in the case of limited wireless resources available for multiplexing, the number of terminal devices involved in multiplexing can be limited through registration and/or deregistration, and thus a problem of congestion due to that a large number of terminal devices simultaneously make a response through backscattering can be solved.

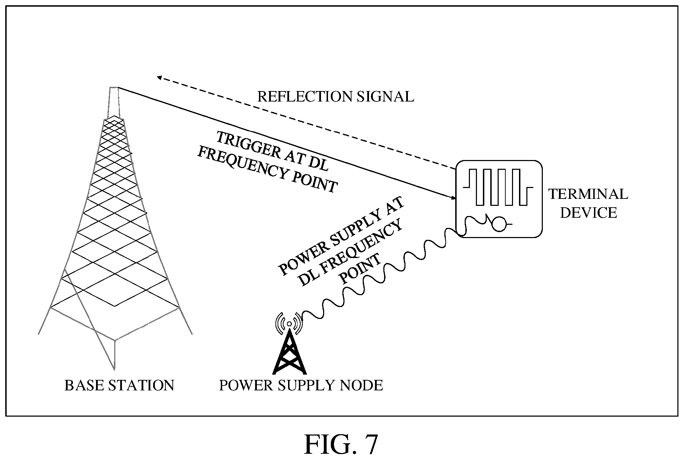

In embodiments of the disclosure, as illustrated in FIG. 7, a signal for power supply and a signal for information transmission (e.g., a triggering signal) in the cellular network may be two signals or one signal. The two signals may not be transmitted in a same frequency band, or may be transmitted at the same frequency point. The base station in the cellular network transmits a power supply signal continuously or intermittently in a certain frequency band, where the power supply signal is a continuous wave (CW), such as a sine wave. The zero-power terminal device performs power harvesting. After the zero-power terminal device obtains power, accordingly, the zero-power terminal device may perform corresponding functions, such as signal reception, signal reflection, signal measurement, etc. In zero-power communication, the terminal device performs backscatter communication by modulating the power supply signal.

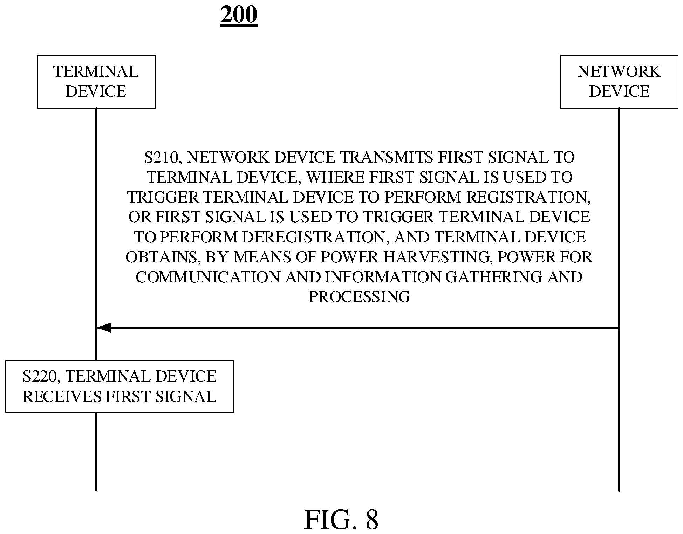

FIG. 8 is a schematic diagram illustrating a method 200 for wireless communication according to embodiments in the disclosure. As illustrated in FIG. 8, the method 200 for wireless communication includes at least part of the following.

At S210, a network device transmits a first signal to a terminal device. The first signal is used to trigger the terminal device to perform registration, or the first signal is used to trigger the terminal device to perform deregistration. The terminal device obtains, by means of power harvesting, power for communication and information gathering and processing.

At S220, the terminal device receives the first signal.

In embodiments of the disclosure, the terminal device obtains, by means of power harvesting, power for communication and information gathering and processing. That is, before the network device communicates with the terminal device, it is required first to ensure that the terminal device receives a radio wave for wireless power supply and obtains wireless power by means of power harvesting.

In the disclosure, registration and deregistration are mainly used to manage multiple zero-power terminal devices and control the number of terminal devices that perform response simultaneously. Specifically, for example, by means of registration and deregistration, multiple zero-power terminal devices in a target cell are managed, and the number of terminal devices that perform response simultaneously in the target cell is controlled.

In some embodiments, the terminal device is a zero-power terminal device. It may be understood that, the terminal device obtains power through power harvesting, and a specific manner in which the terminal device obtains power is not limited in the disclosure. By way of example and not limitation, the terminal device may obtain power through wireless power supply manners such as an RF signal, solar power, pressure, or temperature.

In some embodiments, the first signal may also be referred to as a triggering signal.

Specifically, the terminal device may receive, on a DL channel, the first signal transmitted by the network device.

In some embodiments, the first signal is a power supply signal for the terminal device. That is, the terminal device may obtain power via the first signal, and may be triggered via the first signal to perform registration or deregistration.

In some embodiments, the terminal device obtains power via a power supply signal continuously transmitted by the network device. Specifically, for example, the power supply signal continuously transmitted is a constant-amplitude CW signal.

In some embodiments, power required by the terminal device to transmit the first signal is obtained through power harvesting.

In some embodiments, the terminal device performs registration in the case where the first signal is used to trigger the terminal device to perform registration. In this case, the terminal device may transmit, through backscattering, a signal used for performing feedback on whether registration succeeds, or the terminal device may not perform feedback on whether registration succeeds, which is not limited herein.

In some embodiments, the terminal device performs deregistration in the case where the first signal is used to trigger the terminal device to perform deregistration. In this case, the terminal device may transmit, through backscattering, a signal used for performing feedback on whether deregistration succeeds, or the terminal device may not perform feedback on whether deregistration succeeds, which is not limited herein.

In some embodiments, the first signal carries an ID of the target cell. That is, the first signal is used to trigger the terminal device to register to the target cell, or the first signal is used to trigger the terminal device to deregister from the target cell.

In embodiments of the disclosure, terminal devices in the target cell are triggered to perform registration and deregistration to restrain a large number of terminal devices from simultaneously transmitting reflection signals for response. Furthermore, reflection signals for response are transmitted by means of a UL-DL time-domain multiplexing structure to provide a basis for detection of multiple users. Therefore, in the case where many zero-power devices have performed cell registration, users may be efficiently managed and identified in a specific area (i.e., the target cell).

In some embodiments, the first signal carries the ID of the target cell by means of one of: amplitude modulation, phase modulation, and frequency modulation. That is, the first signal may carry the ID of the target cell by means of code modulation.

In some embodiments, in the case where the first signal carries the ID of the target cell, the terminal device determines, according to registration information stored by the terminal device and the first signal, whether to register to the target cell or deregister from the target cell.

Specifically, for example, in the case where the registration information indicates that the terminal device does not register to the target cell, the terminal device determines to register to the target cell, or the terminal device determines not to deregister from the target cell.

For example, in the case where the first signal is used to trigger the terminal device to perform registration and the registration information indicates that the terminal device does not register to the target cell, the terminal device determines to register to the target cell.

For another example, in the case where the first signal is used to trigger the terminal device to perform deregistration and the registration information indicates that the terminal device does not register to the target cell, the terminal device determines not to deregister from the target cell.

Specifically, for example, in the case where the registration information indicates that the terminal device has registered to the target cell, the terminal device determines not to register to the target cell, or the terminal device determines to deregister from the target cell.

For example, in the case where the first signal is used to trigger the terminal device to perform registration and the registration information indicates that the terminal device has registered to the target cell, the terminal device determines not to register to the target cell.

For another example, in the case where the first signal is used to trigger the terminal device to perform deregistration and the registration information indicates that the terminal device has registered to the target cell, the terminal device determines to deregister from the target cell.

In some embodiments, the terminal device transmits a second signal through backscattering. The second signal indicates that the terminal device determines to register to the target cell or deregister from the target cell, and the second signal carries an ID of the terminal device.

In some embodiments, the second signal carries the ID of the terminal device by means of one of: amplitude modulation, phase modulation, and frequency modulation. That is, the second signal may carry the ID of the terminal device by means of code modulation.

In some embodiments, in the case where the second signal indicates that the terminal device determines to register to the target cell, the terminal device receives a signal indicative of registration confirmation.

In some embodiments, in the case where the second signal indicates that the terminal device determines to deregister from the target cell, the terminal device receives a signal indicative of deregistration confirmation.

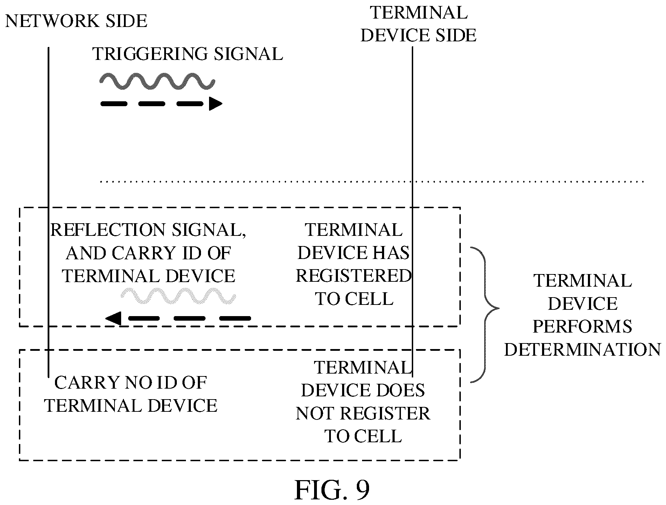

Specifically, for example, as illustrated in FIG. 9, the terminal device receives a triggering signal transmitted by the network device at a DL frequency point, where the triggering signal carries an ID of a cell. The terminal device determines, according to the registration information stored by the terminal device, whether to perform registration. In the case where the terminal device determines to register to the cell, the terminal device transmits, through backscattering, a signal indicating that the terminal device determines to register to the cell, where the signal carries the ID of the terminal device. The terminal device receives a signal indicative of registration confirmation from a network. Specifically, as illustrated in FIG. 9, in the case where the terminal device has registered to the cell, the terminal device transmits, through backscattering, the signal indicating that the terminal device determines to register to the cell, where the signal carries the ID of the terminal device. In the case where the terminal device does not register to the cell, a signal transmitted by the terminal device through backscattering does not carry the ID of the terminal device.

In some embodiments, in the case where the first signal carries the ID of the target cell and the first signal is used to trigger the terminal device to perform registration, the terminal device receives M₁ first-type signals, where each of the M₁ first-type signals is used to trigger the terminal device to perform registration, and M₁ is a positive integer; and the terminal device performs registration to the target cell and performs no feedback on whether registration succeeds. That is, the first signal is equivalent to one of the M₁ first-type signals. In other words, the network device totally transmits M₁ + 1 first-type signals. In this case, the first signal may be a forced registration signal.

In some embodiments, M₁ +1 ≤ a first threshold.

Specifically, the first threshold is agreed by a protocol, or the first threshold is configured by the network device.

In some embodiments, in the case where the first signal carries the ID of the target cell and the first signal is used to trigger the terminal device to perform deregistration, the terminal device receives N₁ second-type signals, where each of the N₁ second-type signals is used to trigger the terminal device to perform deregistration, and N₁ is a positive integer; and the terminal device performs deregistration from the target cell and performs no feedback on whether deregistration succeeds. That is, the first signal is equivalent to one of the N₁ second-type signals. In other words, the network device totally transmits N₁ + 1 second-type signals. In this case, the second signal may be a forced deregistration signal.

In some embodiments, N₁ +1 ≤ a second threshold.

Specifically, the second threshold is agreed by a protocol, or the second threshold is configured by the network device.

In some embodiments, after the terminal device receives a new signal for triggering registration, the ID of the target cell successfully decoded by the terminal device overrides an originally stored cell ID.

In some embodiments, the terminal device receives a signal for triggering deregistration transmitted by the network device. After the terminal device receives the signal for triggering deregistration, the terminal device performs deregistration and deletes the ID of the target cell.

In some embodiments, in the case where the first signal is used to trigger the terminal device to perform registration, the terminal device receives M₂ first-type signals, where each of the M₂ first-type signals is used to trigger the terminal device to perform registration, and M₂ is a positive integer; and the terminal device performs registration and performs no feedback on whether registration succeeds. That is, the first signal is equivalent to one of the M₂ first-type signals. In other words, the network device totally transmits M₂ +1 first-type signals. In this case, the first-type signal may be a forced registration signal.

In some embodiments, M₂ +1 ≤ a third threshold.

Specifically, the third threshold is agreed by a protocol, or the third threshold is configured by the network device.

In some embodiments, in the case where the first signal is used to trigger the terminal device to perform deregistration, the terminal device receives N₂ second-type signals, where each of the N₂ second-type signals is used to trigger the terminal device to perform deregistration, and N₂ is a positive integer; and the terminal device performs deregistration and performs no feedback on whether deregistration succeeds. That is, the first signal is equivalent to one of the N₂ second-type signals. In other words, the network device totally transmits N₂ +1 second-type signals. In this case, the second-type signal may be a forced deregistration signal.

In some embodiments, N₂ + 1 ≤ a fourth threshold.

Specifically, the fourth threshold is agreed by a protocol, or the fourth threshold is configured by the network device.

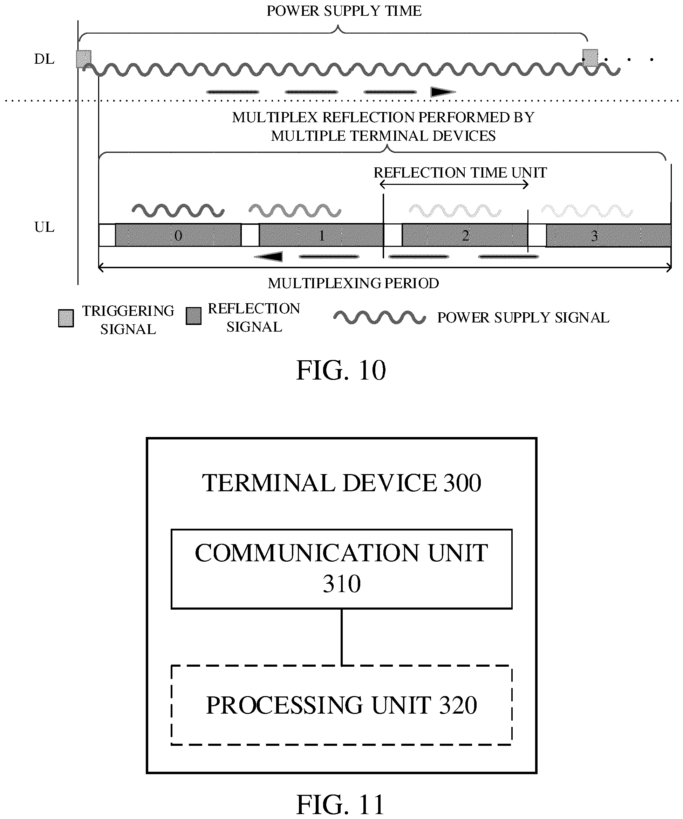

In some embodiments, resources occupied by signals transmitted by multiple terminal devices through backscattering are the same or different. The multiple terminal devices include at least the terminal device. As illustrated in FIG. 10, a granularity of the resources includes at least one of: time domain, frequency domain, or code domain.

In some embodiments, in the case where a resource conflict occurs when the multiple terminal devices perform signal transmission through backscattering, the terminal device determines, according to a random number generated with a random function by the terminal device, a position of a time-frequency resource for performing signal transmission again through backscattering. The granularity of the resource includes at least one of: time domain, frequency domain, or code domain. That is, the terminal device among the multiple terminal devices may determine, by means of random fallback, the position of the time-frequency resource for performing signal transmission again through backscattering.

In some embodiments, in the case where a resource conflict occurs when the multiple terminal devices perform signal transmission through backscattering, the terminal device determines, according to whether a mask of a triggering signal transmitted by a network device matches an ID of the terminal device, whether to perform signal transmission through backscattering. The granularity of the resource includes at least one of: time domain, frequency domain, or code domain. That is, the terminal device among the multiple terminal devices may use a bisection method to determine whether to perform signal transmission through backscattering. Whether to perform registration may be determined by performing signal transmission multiple times.

The embodiments of the disclosure are used for registration and management of multiple terminal devices in the cell. The embodiments of the disclosure may also be used for registration and management of multiple terminal devices in a multiple-cell network and used for roaming maintenance of terminal devices.

In some embodiments, backscatter communication can be performed based on a third-party power supply signal serving as a power source of backscatter communication. Similarly, a power supply signal and a triggering signal can be integrated to be transmitted at a node, or can be combined into a signal, which is not limited herein.

Embodiments of the disclosure mainly solve a problem generated by multiplexing users in time division, and can also solve a problem generated by backscatter communication performed in frequency division, code division, and a combination thereof.

Therefore, in embodiments of the disclosure, the network device triggers, via the first signal, the terminal device to perform registration or deregistration. That is, in embodiments of the disclosure, in the case of limited wireless resources available for multiplexing, the number of terminal devices involved in multiplexing can be limited through registration and/or deregistration, and thus a problem of congestion due to that a large number of terminal devices simultaneously make a response through backscattering can be solved.

In embodiments of the disclosure, limitations to terminal multiplexing in existing zero-power communication technologies are overcome and the problem of congestion due to that a large number of terminal devices in a cell simultaneously make a response through backscattering is solved. With the embodiments of the disclosure, the terminal device can effectively use limited time-domain resources and limited frequency-domain resources.

In embodiments of the disclosure, by means of storing registration information of the terminal device, the number of times of reflection performed by users is reduced, and a time for detecting multiple users can also be greatly reduced. In addition, by means of a time-domain structure for multiplexing users in embodiments of the disclosure, an error in timing/frequency/phase of the zero-power terminal device can be overcome, and problems such as inconsistency of timing advances for multiple users can also be overcome.

In embodiments of the disclosure, in the case of a conflict between a small number of time-frequency positions for multiple users, each terminal device may be identified and perform registration by means of a further solution for multiple-user (multi-user) conflict, thereby ensuring effectiveness of multiplexing.

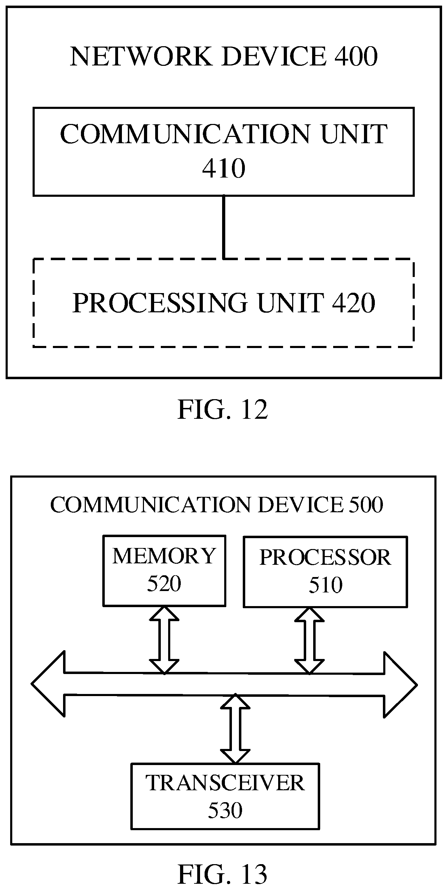

Method embodiments of the disclosure are illustrated in detail above with reference to FIG. 8 to FIG. 10. Apparatus embodiments of the disclosure are illustrated in detail below with reference to FIG. 11 and FIG. 12. It may be understood that the apparatus embodiments and the method embodiments correspond to each other. Reference can be made to the method embodiments for similar illustrations.

FIG. 11 is a schematic block diagram of a terminal device 300 according to embodiments of the disclosure. As illustrated in FIG. 11, the terminal device 300 includes a communication unit 310. The communication unit 310 is configured to receive a first signal. The first signal is used to trigger the terminal device to perform registration, or the first signal is used to trigger the terminal device to perform deregistration. The terminal device obtains, by means of power harvesting, power for communication and information gathering and processing.

In some embodiments, the first signal carries an ID of a target cell.

In some embodiments, the first signal carries the ID of the target cell by means of one of: amplitude modulation, phase modulation, and frequency modulation.

In some embodiments, the terminal device 300 further includes a processing unit 320. The processing unit 320 is configured to determine, according to registration information stored by the terminal device and the first signal, whether to register to the target cell or deregister from the target cell.

In some embodiments, the processing unit 320 is specifically configured to: determine to register to the target cell, or determine, by the terminal device, not to deregister from the target cell, in the case where the registration information indicates that the terminal device does not register to the target cell. Optionally, the processing unit 320 is specifically configured to: determine not to register to the target cell, or determine, by the terminal device, to deregister from the target cell, in the case where the registration information indicates that the terminal device has registered to the target cell.

In some embodiments, the communication unit 310 is further configured to transmit a second signal through backscattering. The second signal indicates that the terminal device determines to register to the target cell or deregister from the target cell, and the second signal carries an ID of the terminal device.

In some embodiments, the second signal carries the ID of the terminal device by means of one of: amplitude modulation, phase modulation, and frequency modulation.

In some embodiments, the communication unit 310 is further configured to receive a signal indicative of registration confirmation, in the case where the second signal indicates that the terminal device determines to register to the target cell; Optionally, the communication unit 310 is further configured to receive a signal indicative of deregistration confirmation, in the case where the second signal indicates that the terminal device determines to deregister from the target cell.

In some embodiments, the terminal device 300 further includes a processing unit 320. The communication unit 310 is further configured to receive M₁ first-type signals, in the case where the first signal is used to trigger the terminal device to perform registration. Each of the M₁ first-type signals is used to trigger the terminal device to perform registration, and M₁ is a positive integer. The processing unit 320 is configured to perform registration to the target cell, and perform, by the terminal device, no feedback on whether registration succeeds, in the case where the first signal is used to trigger the terminal device to perform registration.

In some embodiments, M₁ +1 ≤ a first threshold.

In some embodiments, the terminal device 300 further includes a processing unit 320. The communication unit 310 is further configured to receive N₁ second-type signals, in the case where the first signal is used to trigger the terminal device to perform deregistration. Each of the N₁ second-type signals is used to trigger the terminal device to perform deregistration, and N₁ is a positive integer. The processing unit 320 is configured to perform deregistration from the target cell, and perform, by the terminal device, no feedback on whether deregistration succeeds, in the case where the first signal is used to trigger the terminal device to perform deregistration.

In some embodiments, N₁ +1 ≤ a second threshold.

In some embodiments, the terminal device 300 further includes a processing unit 320. The communication unit 310 is further configured to receive M₂ first-type signals, in the case where the first signal is used to trigger the terminal device to perform registration. Each of the M₂ first-type signals is used to trigger the terminal device to perform registration, and M₂ is a positive integer. The processing unit 320 is configured to perform registration, and perform, by the terminal device, no feedback on whether registration succeeds, in the case where the first signal is used to trigger the terminal device to perform registration.

In some embodiments, M₂ +1 ≤ a third threshold.

In some embodiments, the terminal device 300 further includes a processing unit 320. The communication unit 310 is further configured to receive N₂ second-type signals, in the case where the first signal is used to trigger the terminal device to perform deregistration. Each of the N₂ second-type signals is used to trigger the terminal device to perform deregistration, and N₂ is a positive integer. The processing unit 320 is configured to perform deregistration, and perform, by the terminal device, no feedback on whether deregistration succeeds, in the case where the first signal is used to trigger the terminal device to perform deregistration.

In some embodiments, N₂ + 1 ≤ a fourth threshold.

In some embodiments, the terminal device 300 further includes a processing unit 320. The processing unit 320 is configured to perform registration in the case where the first signal is used to trigger the terminal device to perform registration. Optionally, the processing unit 320 is configured to perform deregistration in the case where the first signal is used to trigger the terminal device to perform deregistration.

In some embodiments, resources occupied by signals transmitted by multiple terminal devices through backscattering are the same or different. The multiple terminal devices include at least the terminal device.

In some embodiments, the terminal device 300 further includes a processing unit 320. The processing unit 320 is configured to determine, according to a random number generated with a random function by the terminal device, a position of a time-frequency resource for performing signal transmission again through backscattering, or determine, according to whether a mask of a triggering signal transmitted by a network device matches an ID of the terminal device, whether to perform signal transmission through backscattering, in the case where a resource conflict occurs when the multiple terminal devices perform signal transmission through backscattering.

In some embodiments, a granularity of the resource includes at least one of: time domain, frequency domain, or code domain.

In some embodiments, the first signal is a power supply signal for the terminal device.

In some embodiments, the terminal device obtains power through a power supply signal continuously transmitted by a network device.

In some embodiments, the power supply signal continuously transmitted is a constant-amplitude CW signal.

In some embodiments, the foregoing communication unit may be a communication interface or a transceiver, or an input/output interface of a communication chip or a system-on-chip (SOC). The processing unit may be one or more processors.

It may be understood that, the terminal device 300 according to embodiments of the disclosure may correspond to the terminal device in the method embodiments of the disclosure, and the foregoing and other operations and/or functions of various units in the terminal device 300 are respectively intended for implementing corresponding operations of the terminal device in the method 200 illustrated in FIG. 8, which will not be described again herein for the sake of simplicity.

FIG. 12 is a schematic block diagram of a network device 400 according to embodiments of the disclosure. As illustrated in FIG. 12, the network device 400 includes a communication unit 410. The communication unit 410 is configured to transmit a first signal to a terminal device. The first signal is used to trigger the terminal device to perform registration, or the first signal is used to trigger the terminal device to perform deregistration. The terminal device obtains, by means of power harvesting, power for communication and information gathering and processing.

In some embodiments, the first signal carries an ID of a target cell.

In some embodiments, the first signal carries the ID of the target cell by means of one of: amplitude modulation, phase modulation, and frequency modulation.

In some embodiments, the first signal is used by the terminal device to determine, in conjunction with registration information stored by the terminal device, whether to register to the target cell or deregister from the target cell.

In some embodiments, in the case where the registration information indicates that the terminal device does not register to the target cell, the first signal is used by the terminal device to determine to register to the target cell, or the first signal is used by the terminal device to determine not to deregister from the target cell. Optionally, in the case where the registration information indicates that the terminal device has registered to the target cell, the first signal is used by the terminal device to determine not to register to the target cell, or the first signal is used by the terminal device to determine to deregister from the target cell.

In some embodiments, the communication unit 410 is further configured to receive a second signal transmitted by the terminal device through backscattering. The second signal indicates that the terminal device determines to register to the target cell or deregister from the target cell, and the second signal carries an ID of the terminal device.

In some embodiments, the second signal carries the ID of the terminal device by means of one of: amplitude modulation, phase modulation, and frequency modulation.

In some embodiments, the communication unit 410 is further configured to transmit to the terminal device a signal indicative of registration confirmation, in the case where the second signal indicates that the terminal device determines to register to the target cell. Optionally, the communication unit 410 is further configured to transmit to the terminal device a signal indicative of deregistration confirmation, in the case where the second signal indicates that the terminal device determines to deregister from the target cell.

In some embodiments, the network device 400 further includes a processing unit 420. The communication unit 410 is further configured to transmit M₁ first-type signals to the terminal device, in the case where the first signal is used to trigger the terminal device to perform registration. Each of the M₁ first-type signals is used to trigger the terminal device to perform registration, and M₁ is a positive integer. The processing unit 420 does not expect that the terminal device performs feedback on whether registration to the target cell succeeds.

In some embodiments, M₁ +1 ≤ a first threshold.

In some embodiments, the network device 400 further includes a processing unit 420. The communication unit 410 is further configured to transmit N₁ second-type signals to the terminal device, in the case where the first signal is used to trigger the terminal device to perform deregistration. Each of the N₁ second-type signals is used to trigger the terminal device to perform deregistration, and N₁ is a positive integer. The processing unit 420 does not expect that the terminal device performs feedback on whether deregistration from the target cell succeeds.

In some embodiments, N₁ +1 ≤ a second threshold.

In some embodiments, the network device 400 further includes a processing unit 420. The communication unit 410 is further configured to transmit M₂ first-type signals to the terminal device, in the case where the first signal is used to trigger the terminal device to perform registration. Each of the M₂ first-type signals is used to trigger the terminal device to perform registration, and M₂ is a positive integer. The processing unit 420 does not expect that the terminal device performs feedback on whether registration succeeds.

In some embodiments, M₂ +1 ≤ a third threshold.

In some embodiments, the network device 400 further includes a processing unit 420. The communication unit 410 is further configured to transmit N₂ second-type signals to the terminal device, in the case where the first signal is used to trigger the terminal device to perform deregistration. Each of the N₂ second-type signals is used to trigger the terminal device to perform deregistration, and N₂ is a positive integer. The processing unit 420 does not expect that the terminal device performs feedback on whether registration to the target cell succeeds.

In some embodiments, N₂ + 1 ≤ a fourth threshold.

In some embodiments, resources occupied by signals transmitted by multiple terminal devices to the network device through backscattering are the same or different. The multiple terminal devices include at least the terminal device.

In some embodiments, in the case where a resource conflict occurs when the multiple terminal devices perform signal transmission through backscattering, a position of a time-frequency resource for the terminal device to perform signal transmission again through backscattering is determined according to a random number generated with a random function by the terminal device, or whether the terminal device performs signal transmission through backscattering is determined according to whether a mask of a triggering signal transmitted by the network device matches an ID of the terminal device.

In some embodiments, a granularity of the resource includes at least one of: time domain, frequency domain, or code domain.

In some embodiments, the first signal is a power supply signal for the terminal device.

In some embodiments, the network device supplies power to the terminal device via a power supply signal continuously transmitted.

In some embodiments, the power supply signal continuously transmitted is a constant-amplitude CW signal.

In some embodiments, the foregoing communication unit may be a communication interface or a transceiver, or an input/output interface of a communication chip or an SOC. The processing unit may be one or more processors.

It may be understood that, the network device 400 according to embodiments of the disclosure may correspond to the network device in the method embodiments of the disclosure, and the foregoing and other operations and/or functions of various units in the network device 400 are respectively intended for implementing corresponding operations of the network device in the method 200 illustrated in FIG. 8, which will not be described again herein for the sake of simplicity.

FIG. 13 is a schematic block diagram of a communication device 500 according to embodiments of the disclosure. As illustrated in FIG. 13, the communication device 500 includes a processor 510. The processor 510 may be configured to invoke and execute computer programs stored in a memory to perform the method in embodiments of the disclosure.

In some embodiments, as illustrated in FIG. 13, the communication device 500 may further include a memory 520. The processor 510 may be configured to invoke and execute computer programs stored in the memory 520 to perform the method in embodiments of the disclosure.

The memory 520 may be a separate device independent of the processor 510, or may be integrated in the processor 510.

In some embodiments, as illustrated in FIG. 13, the communication device 500 may further include a transceiver 530. The processor 510 may be configured to control the transceiver 530 to communicate with other devices. Specifically, the transceiver 530 may be configured to transmit information or data to other devices, or receive information or data transmitted by other devices.

The transceiver 530 may include a transmitter and a receiver. The transceiver 530 may further include one or more antennas.

In some embodiments, the communication device 500 may specifically be the network device in the embodiments of the disclosure, and the communication device 500 can implement the corresponding process implemented by the network device in various methods in embodiments of the disclosure, which will not be repeated herein for the sake of simplicity.

In some embodiments, the communication device 500 may specifically be the terminal device in the embodiments of the disclosure, and the communication device 500 can implement the corresponding process implemented by the terminal device in various methods in embodiments of the disclosure, which will not be repeated herein for the sake of simplicity.

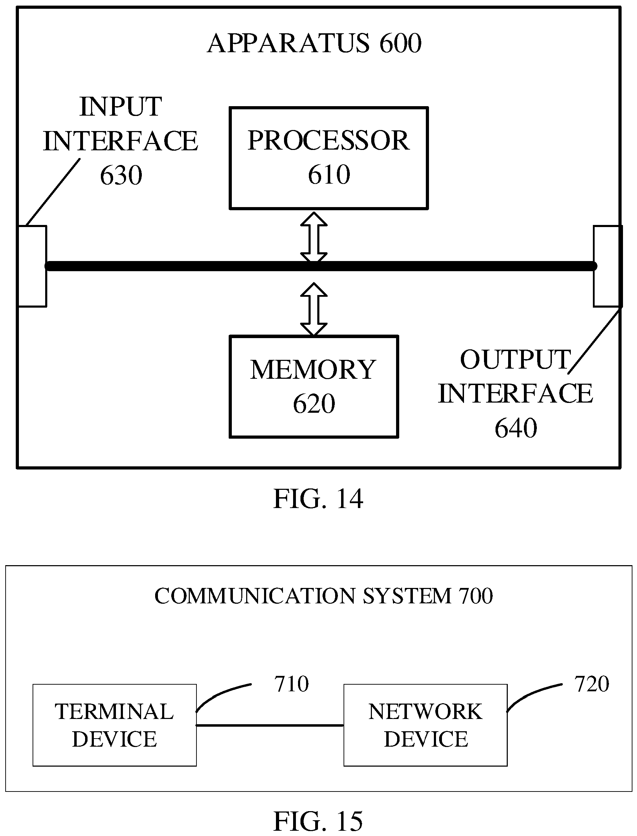

FIG. 14 is a schematic block diagram of an apparatus according to embodiments of the disclosure. As illustrated in FIG. 14, the apparatus 600 includes a processor 610. The processor 610 may be configured to invoke and execute computer programs stored in a memory to perform the method in embodiments of the disclosure.

In some embodiments, as illustrated in FIG. 14, the apparatus 600 may further include a memory 620. The processor 610 may be configured to invoke and execute computer programs stored in the memory 620 to perform the method in embodiments of the disclosure.

The memory 620 may be a separate device independent of the processor 610, or may be integrated in the processor 610.

In some embodiments, the apparatus 600 may further include an input interface 630. The processor 610 may be configured to control the input interface 630 to communicate with other devices or chips. Specifically, the input interface 630 may be configured to obtain information or data transmitted by other devices or chips.

In some embodiments, the apparatus 600 may further include an output interface 640. The processor 610 may be configured to control the output interface 640 to communicate with other devices or chips. Specifically, the output interface 640 may be configured to output information or data to other devices or chips.

In some embodiments, the apparatus may be applied to the network device in the embodiments of the disclosure, and the device may implement the corresponding process implemented by the network device in various methods in embodiments of the disclosure, which will not be repeated herein for the sake of simplicity.

In some embodiments, the apparatus may be applied to the terminal device in the embodiments of the disclosure, and the device may implement the corresponding process implemented by the terminal device in various methods in embodiments of the disclosure, which will not be repeated herein for the sake of simplicity.

In some embodiments, the apparatus referred to herein may also be a chip. For example, the apparatus may also be a system-level chip, a system chip, a chip system, or an SOC chip.

FIG. 15 is a schematic block diagram of a communication system 700 according to embodiments of the disclosure. As illustrated in FIG. 15, the communication system 700 includes a terminal device 710 and a network device 720.

The terminal device 710 may be configured to implement corresponding functions implemented by the terminal device in the method above, and the network device 720 may be configured to implement corresponding functions implemented by the network device in the method above, which will not be repeated herein for the sake of simplicity.

It may be understood that the processor referred to herein may be an integrated circuit chip with signal-processing capabilities. During implementation, each step of the foregoing method may be completed by an integrated logic circuit of hardware in the processor or an instruction in the form of software. The processor may be a general-purpose processor, a digital signal processor (DSP), an application specific integrated circuit (ASIC), a field programmable gate array (FPGA) or other programmable logic devices, discrete gates or transistor logic devices, or discrete hardware components. The methods, operations, and logic block diagrams disclosed in embodiments can be implemented or executed. The general-purpose processor may be a microprocessor, or the processor may be any conventional processor or the like. The operations of the method disclosed in embodiments of the disclosure may be directly implemented as a hardware decoding processor, or may be performed by hardware and software modules in the decoding processor. The software module can be located in a storage medium such as a random access memory (RAM), a flash memory, a read-only memory (ROM), a programmable ROM (PROM), or an electrically erasable programmable memory, a register, and the like. The storage medium is located in the memory. The processor reads information in the memory, and completes the operations of the method above with the hardware thereof.

It may be understood that, the memory may be a volatile memory or a non-volatile memory, or may include both the volatile memory and the non-volatile memory. The non-volatile memory may be an ROM, a PROM, an erasable PROM (EPROM), an electrically EPROM (EEPROM), or a flash memory. The volatile memory may be an RAM that acts as an external cache. By way of example but not limitation, many forms of RAM are available, such as a static RAME (SRAM), a dynamic RAM (DRAM), a synchronous DRAM (SDRAM), a double data rate SDRAM (DDR SDRAM), an enhanced SDRAM (ESDRAM), a synchlink DRAM (SLDRAM), and a direct rambus RAM (DR RAM). It may be noted that the memory of the system and the method described herein is intended to include, but is not limited to, these and any other suitable types of memory.

It may be understood that, the above illustration of the memory is intended for illustration rather than limitation. For example, the memory in embodiments of the disclosure may also be an SRAM, a DRAM, an SDRAM, a DDR SDRAM, an ESDRAM, an SLDRAM, a DR RAM, and so on. In other words, the memory in embodiments of the disclosure is intended to include, but is not limited to, these and any other suitable types of memory.

Embodiments of the disclosure further provide a computer-readable storage medium. The computer-readable storage medium is configured to store computer programs.

In some embodiments, the computer-readable storage medium is applicable to the network device in embodiments of the disclosure. The computer programs enable a computer to implement the corresponding processes implemented by the network device in the foregoing method in embodiments of the disclosure, which will not be repeated herein for the sake of simplicity.

In some embodiments, the computer-readable storage medium is applicable to the terminal device in embodiments of the disclosure. The computer programs enable a computer to implement the corresponding processes implemented by the terminal device in the foregoing method in embodiments of the disclosure, which will not be repeated herein for the sake of simplicity.

Embodiments of the disclosure further provide a computer program product. The computer program product includes computer program instructions.

In some embodiments, the computer program product is applicable to the network device in embodiments of the disclosure. The computer program instructions enable a computer to implement the corresponding processes implemented by the network device in the foregoing method in embodiments of the disclosure, which will not be repeated herein for the sake of simplicity.

In some embodiments, the computer program product is applicable to the terminal device in embodiments of the disclosure. The computer program instructions enable a computer to implement the corresponding processes implemented by the terminal device in the foregoing method in embodiments of the disclosure, which will not be repeated herein for the sake of simplicity.

Embodiments of the disclosure further provide a computer program.

In some embodiments, the computer program is applicable to the network device in embodiments of the disclosure. The computer program, when run on a computer, enables the computer to implement the corresponding processes implemented by the network device in the foregoing method in embodiments of the disclosure, which will not be repeated herein for the sake of simplicity.

In some embodiments, the computer program is applicable to the terminal device in embodiments of the disclosure. The computer program, when run on a computer, enables the computer to implement the corresponding processes implemented by the terminal device in the foregoing method in embodiments of the disclosure, which will not be repeated herein for the sake of simplicity.

Those of ordinary skill in the art will appreciate that units and algorithmic operations of various examples described in connection with embodiments herein can be implemented by electronic hardware or by a combination of computer software and electronic hardware. Whether these functions are performed by means of hardware or software depends on the particular application and the design constraints of the associated technical solution. Those skilled in the art may use different methods with regard to each particular application to implement the described functions, but such methods may not be regarded as lying beyond the scope of the disclosure.

It may be evident to those skilled in the art that, for the sake of convenience and simplicity, in terms of the operating processes of the foregoing systems, apparatuses, and units, reference can be made to the corresponding processes of the above method embodiments, which will not be repeated herein.

It may be appreciated that the systems, apparatuses, and methods disclosed in embodiments herein may also be implemented in various other manners. For example, the above apparatus embodiments are merely illustrative, e.g., the division of units is only a division of logical functions, and there may exist other manners of division in practice, e.g., multiple units or assemblies may be combined or may be integrated into another system, or some features may be ignored or skipped. In other respects, the coupling or direct coupling or communication connection as illustrated or discussed may be an indirect coupling or communication connection through some interfaces, apparatus, or units, and may be electrical, mechanical, or of other forms.

Separated units as illustrated may or may not be physically separated. Components or parts displayed as units may or may not be physical units, i.e., may reside at one location or may be distributed to multiple network units. Some or all of the units may be selectively adopted according to practical needs to achieve desired objectives of the disclosure.

In addition, various functional units described in embodiments herein may be integrated into one processing unit or may be present as a number of physically separated units, and two or more units may be integrated into one unit.

If the functions are implemented as software functional units and sold or used as standalone products, they may be stored in a computer-readable storage medium. Based on such understanding, the essential technical solution, or the portion that contributes to the related art, or all or part of the technical solution of the disclosure may be embodied as software products. The computer software products can be stored in a storage medium and may include multiple instructions that, when executed, can cause a computing device (may be a personal computer, a server, a network device, etc.) to execute some or all operations of the methods described in various embodiments of the disclosure. The storage medium may include various kinds of media that can store program codes, such as a universal serial bus (USB) flash disk, a mobile hard drive, an ROM, an RAM, a magnetic disk, or an optical disk.

The above are merely detailed embodiments of the disclosure and are not intended to limit the scope of protection of the disclosure. Any modification and replacement made by those skilled in the art within the technical scope of the disclosure shall be included in the scope of protection of the disclosure. Therefore, the scope of protection of the disclosure may be stated in the scope of protection of the claims.

## Claims

1. A method for wireless communication, comprising:
receiving, by a terminal device, a first signal, wherein
the first signal is used to trigger the terminal device to perform registration, or the first signal is used to trigger the terminal device to perform deregistration; and the terminal device obtains, by means of power harvesting, power for communication and information gathering and processing.

2. The method of claim 1, wherein the first signal carries an identifier (ID) of a target cell.

3. The method of claim 2, wherein
the first signal carries the ID of the target cell by means of one of: amplitude modulation, phase modulation, and frequency modulation.

4. The method of claim 2 or 3, further comprising:
determining, by the terminal device according to registration information stored by the terminal device and the first signal, whether to register to the target cell or deregister from the target cell.

5. The method of claim 4, wherein determining, by the terminal device according to the registration information stored by the terminal device and the first signal, whether to register to the target cell or deregister from the target cell, comprises:
in the case where the registration information indicates that the terminal device does not register to the target cell, determining, by the terminal device, to register to the target cell, or determining, by the terminal device, not to deregister from the target cell; or
in the case where the registration information indicates that the terminal device has registered to the target cell, determining, by the terminal device, not to register to the target cell, or determining, by the terminal device, to deregister from the target cell.

6. The method of claim 4 or 5, further comprising:
transmitting, by the terminal device, a second signal through backscattering, wherein
the second signal indicates that the terminal device determines to register to the target cell or deregister from the target cell, and the second signal carries an ID of the terminal device.

7. The method of claim 6, wherein
the second signal carries the ID of the terminal device by means of one of: amplitude modulation, phase modulation, and frequency modulation.

8. The method of claim 6 or 7, further comprising:
in the case where the second signal indicates that the terminal device determines to register to the target cell, receiving, by the terminal device, a signal indicative of registration confirmation; or
in the case where the second signal indicates that the terminal device determines to deregister from the target cell, receiving, by the terminal device, a signal indicative of deregistration confirmation.

9. The method of claim 2 or 3, wherein the first signal is used to trigger the terminal device to perform registration, and the method further comprises:
receiving, by the terminal device, M₁ first-type signals, wherein each of the M₁ first-type signals is used to trigger the terminal device to perform registration, and M₁ is a positive integer; and
performing, by the terminal device, registration to the target cell, and performing, by the terminal device, no feedback on whether registration succeeds.

10. The method of claim 9, wherein M₁ +1 ≤ a first threshold.

11. The method of claim 2 or 3, wherein the first signal is used to trigger the terminal device to perform deregistration, and the method further comprises:
receiving, by the terminal device, N₁ second-type signals, wherein each of the N₁ second-type signals is used to trigger the terminal device to perform deregistration, and N₁ is a positive integer; and
performing, by the terminal device, deregistration from the target cell, and performing, by the terminal device, no feedback on whether deregistration succeeds.

12. The method of claim 11, wherein N₁ +1 ≤ a second threshold.

13. The method of claim 1, wherein the first signal is used to trigger the terminal device to perform registration, and the method further comprises:
receiving, by the terminal device, M₂ first-type signals, wherein each of the M₂ first-type signals is used to trigger the terminal device to perform registration, and M₂ is a positive integer; and
performing, by the terminal device, registration, and performing, by the terminal device, no feedback on whether registration succeeds.

14. The method of claim 13, wherein M₂ +1 ≤ a third threshold.

15. The method of claim 1, wherein the first signal is used to trigger the terminal device to perform deregistration, and the method further comprises:
receiving, by the terminal device, N₂ second-type signals, wherein each of the N₂ second-type signals is used to trigger the terminal device to perform deregistration, and N₂ is a positive integer; and
performing, by the terminal device, deregistration, and performing, by the terminal device, no feedback on whether deregistration succeeds.

16. The method of claim 15, wherein N₂ + 1 ≤ a fourth threshold.

17. The method of claim 1, further comprising:
in the case where the first signal is used to trigger the terminal device to perform registration, performing, by the terminal device, registration; or
in the case where the first signal is used to trigger the terminal device to perform deregistration, performing, by the terminal device, deregistration.

18. The method of any one of claims 1 to 17, wherein
resources occupied by signals transmitted by a plurality of terminal devices through backscattering are the same or different, wherein
the plurality of terminal devices comprise at least the terminal device.

19. The method of claim 18, further comprising:
in the case where a resource conflict occurs when the plurality of terminal devices perform signal transmission through backscattering, determining, by the terminal device according to a random number generated with a random function by the terminal device, a position of a time-frequency resource for performing signal transmission again through backscattering, or determining, by the terminal device according to whether a mask of a triggering signal transmitted by a network device matches an ID of the terminal device, whether to perform signal transmission through backscattering.

20. The method of claim 18 or 19, wherein
a granularity of the resource comprises at least one of: time domain, frequency domain, or code domain.

21. The method of any one of claims 1 to 20, wherein the first signal is a power supply signal for the terminal device.

22. The method of any one of claims 1 to 21, wherein
the terminal device obtains power through a power supply signal continuously transmitted by a network device.

23. The method of claim 22, wherein the power supply signal continuously transmitted is a constant-amplitude continuous-wave (CW) signal.

24. A method for wireless communication, comprising:
transmitting, by a network device, a first signal to a terminal device, wherein
the first signal is used to trigger the terminal device to perform registration, or the first signal is used to trigger the terminal device to perform deregistration; and the terminal device obtains, by means of power harvesting, power for communication and information gathering and processing.

25. The method of claim 24, wherein the first signal carries an identifier (ID) of a target cell.

26. The method of claim 25, wherein
the first signal carries the ID of the target cell by means of one of: amplitude modulation, phase modulation, and frequency modulation.

27. The method of claim 25 or 26, wherein
the first signal is used by the terminal device to determine, in conjunction with registration information stored by the terminal device, whether to register to the target cell or deregister from the target cell.

28. The method of claim 27, wherein
in the case where the registration information indicates that the terminal device does not register to the target cell, the first signal is used by the terminal device to determine to register to the target cell, or the first signal is used by the terminal device to determine not to deregister from the target cell; or
in the case where the registration information indicates that the terminal device has registered to the target cell, the first signal is used by the terminal device to determine not to register to the target cell, or the first signal is used by the terminal device to determine to deregister from the target cell.

29. The method of claim 27 or 28, further comprising:
receiving, by the network device, a second signal transmitted by the terminal device through backscattering, wherein
the second signal indicates that the terminal device determines to register to the target cell or deregister from the target cell, and the second signal carries an ID of the terminal device.

30. The method of claim 29, wherein
the second signal carries the ID of the terminal device by means of one of: amplitude modulation, phase modulation, and frequency modulation.

31. The method of claim 29 or 30, further comprising:
in the case where the second signal indicates that the terminal device determines to register to the target cell, transmitting, by the network device, to the terminal device a signal indicative of registration confirmation; or
in the case where the second signal indicates that the terminal device determines to deregister from the target cell, transmitting, by the network device, to the terminal device a signal indicative of deregistration confirmation.

32. The method of claim 25 or 26, wherein the first signal is used to trigger the terminal device to perform registration, and the method further comprises:
transmitting, by the network device, M₁ first-type signals to the terminal device, wherein each of the M₁ first-type signals is used to trigger the terminal device to perform registration, and M₁ is a positive integer, wherein
the network device does not expect that the terminal device performs feedback on whether registration to the target cell succeeds.

33. The method of claim 32, wherein M₁ +1 ≤ a first threshold.

34. The method of claim 25 or 26, wherein the first signal is used to trigger the terminal device to perform deregistration, and the method further comprises:
transmitting, by the network device, N₁ second-type signals, wherein each of the N₁ second-type signals is used to trigger the terminal device to perform deregistration, and N₁ is a positive integer, wherein
the network device does not expect that the terminal device performs feedback on whether deregistration from the target cell succeeds.

35. The method of claim 34, wherein N₁ +1 ≤ a second threshold.

36. The method of claim 24, wherein the first signal is used to trigger the terminal device to perform registration, and the method further comprises:
transmitting, by the network device, M₂ first-type signals, wherein each of the M₂ first-type signals is used to trigger the terminal device to perform registration, and M₂ is a positive integer, wherein
the network device does not expect that the terminal device performs feedback on whether registration succeeds.

37. The method of claim 36, wherein M₂ +1 ≤ a third threshold.

38. The method of claim 24, wherein the first signal is used to trigger the terminal device to perform deregistration, and the method further comprises:
transmitting, by the network device, N₂ second-type signals, wherein each of the N₂ second-type signals is used to trigger the terminal device to perform deregistration, and N₂ is a positive integer, wherein
the network device does not expect that the terminal device performs feedback on whether deregistration succeeds.

39. The method of claim 38, wherein N₂ + 1 ≤ a fourth threshold.

40. The method of any one of claims 24 to 39, wherein
resources occupied by signals transmitted by a plurality of terminal devices to the network device through backscattering are the same or different, wherein
the plurality of terminal devices comprise at least the terminal device.

41. The method of claim 40, wherein
in the case where a resource conflict occurs when the plurality of terminal devices perform signal transmission through backscattering, a position of a time-frequency resource for the terminal device to perform signal transmission again through backscattering is determined according to a random number generated with a random function by the terminal device, or whether the terminal device performs signal transmission through backscattering is determined according to whether a mask of a triggering signal transmitted by the network device matches an ID of the terminal device.

42. The method of claim 40 or 41, wherein the
a granularity of the resource comprises at least one of: time domain, frequency domain, or code domain.

43. The method of any one of claims 24 to 42, wherein the first signal is a power supply signal for the terminal device.

44. The method of any one of claims 24 to 43, wherein the
supplying, by the network device, power to the terminal device via a power supply signal continuously transmitted.

45. The method of claim 44, wherein the power supply signal continuously transmitted is a constant-amplitude continuous-wave (CW) signal.

46. A terminal device, comprising:
a communication unit configured to receive a first signal, wherein
the first signal is used to trigger the terminal device to perform registration, or the first signal is used to trigger the terminal device to perform deregistration; and the terminal device obtains, by means of power harvesting, power for communication and information gathering and processing.

47. A network device, comprising:
a communication unit configured to transmit a first signal to a terminal device, wherein
the first signal is used to trigger the terminal device to perform registration, or the first signal is used to trigger the terminal device to perform deregistration; and the terminal device obtains, by means of power harvesting, power for communication and information gathering and processing.

48. A terminal device, comprising a processor and a memory, wherein the memory is configured to store computer programs, and the processor is configured to invoke and execute the computer programs stored in the memory to enable the terminal device to perform the method of any one of claims 1 to 23.

49. A network device, comprising a processor and a memory, wherein the memory is configured to store computer programs, and the processor is configured to invoke and execute the computer programs stored in the memory to enable the terminal device to perform the method of any one of claims 24 to 45.

50. A chip, comprising a processor configured to invoke and execute computer programs stored in a memory to enable a device equipped with the chip to perform the method of any one of claims 1 to 23 or the method of any one of claims 24 to 45.

51. A computer-readable storage medium configured to store computer programs which enable a computer to perform the method of any one of claims 1 to 23 or the method of any one of claims 24 to 45.

52. A computer program product comprising computer program instructions which enable a computer to perform the method of any one of claims 1 to 23 or the method of any one of claims 24 to 45.

53. A computer program enabling a computer to perform the method of any one of claims 1 to 23 or the method of any one of claims 24 to 45.
